# EUROPÄISCHE PATENTANMELDUNG

(11) **EP 1 438 893 A1**
(43) Veröffentlichungstag der Anmeldung: **21.07.2004**
(21) Anmeldenummer: 04405022.7
(22) Anmeldetag: 12.01.2004
(51) Int. Cl.: A01G 25/14

(54) **Giesskanne**

(30) Priorität: 14.01.2003 CH 472003
(71) Anmelder: Oster, Heinz, 8245 Feuerthalen (CH)
(72) Erfinder: Oster, Heinz, 8245 Feuerthalen (CH)
(74) Vertreter: Patentanwälte Breiter + Wiedmer AG

(57) **Zusammenfassung**

Eine Giesskanne (10) umfasst einen Behälter (12) mit einem unten von einem Behälterboden (14) verschlossenen und oben zur Bereitstellung einer Einfüllöffnung (20) zumindest teilweise offenen Behältermantel (16), ein mit dem Behälter (12) verbundenes Giessrohr (22) und einen am Behälter (12) festgelegten Traggriff (26) mit einem den der Gesamthöhe (H) der Giesskanne (10) entsprechenden grössten Abstand senkrecht zu einer Standfläche (S) der Giesskanne (10) aufweisenden Griffbereich (G). Die Gesamthöhe (H) der Giesskanne (10) ist so eingestellt oder einstellbar, dass der Griffbereich (G) des Traggriffes (26) der auf einer horizontalen Ebene stehenden Giesskanne von einer Hand einer auf der gleichen Ebene in im wesentlichen aufrechter Haltung stehenden Person umgreifbar ist.

## Beschreibung

Die Erfindung betrifft eine Giesskanne, umfassend einen Behälter mit einem unten von einem Behälterboden verschlossenen und oben zur Bereitstellung einer Einfüllöffnung zumindest teilweise offenen Behältermantel, ein mit dem Behälter verbundenes Giessrohr und einen am Behälter festgelegten Traggriff mit einem den grössten, der Gesamthöhe der Giesskanne entsprechenden Abstand senkrecht zu einer Standfläche der Giesskanne aufweisenden Griffbereich.

Herkömmliche Giesskannen für den Gebrauch im Garten sind aus Metall oder Kunststoff gefertigt und weisen ein Fassungsvolumen von 6 bis 15 L auf. Die der Gesamthöhe der Giesskanne entsprechende Höhe des zum Anheben und Tragen vorgesehenen Griffbereichs des Traggriffs liegt üblicherweise bei etwa 30 bis 40 cm. Diese Traggriffhöhe reicht für eine erwachsene Person im allgemeinen nicht aus, den Traggriff bei im wesentlichen aufrechter Haltung mit der Hand zu umgreifen, und es ist erforderlich, dass die Person sich bückt. Beim anschliessenden Anheben der Giesskanne nimmt die Person wieder eine aufrechte Haltung ein. Da die dazu notwendige Kraft hauptsächlich von der Rükkenmuskulatur bereitgestellt wird, können bei wenig trainierten und auch bei älteren Personen bereits nach wenigen Hebebewegungen der genannten Art Rückenbeschwerden auftreten.

Der Erfindung liegt die Aufgabe zugrunde, eine Giesskanne der eingangs genannten Art derart weiterzubilden, dass eine den Rücken schonende Handhabung ermöglicht wird.

Zur erfindungsgemässen Lösung der Aufgabe führt, dass die Gesamthöhe der Giesskanne so eingestellt oder einstellbar ist, dass der Griffbereich des Traggriffes der auf einer horizontalen Ebene stehenden Giesskanne von einer Hand einer auf der gleichen Ebene in im wesentlichen aufrechter Haltung stehenden Person umgreifbar ist.

Ausgehend von einer Standard-Giesskanne mit einem vorgegebenen Fassungsvolumen bieten sich grundsätzlich die drei folgenden Verbesserungsmassnahmen an:
- Der Durchmesser bzw. die Querschnittsfläche des Behältermantels wird zugunsten eine höheren Behälters verkleinert.
- Die Gesamthöhe der Giesskanne wird durch ein Fussteil am Behälterboden vergrössert.
- Der Griffbereich wird durch eine Vergrösserung des Traggriffes höher gelegt.

Es ist ohne weiteres verständlich, dass die gewünschte Höherlegung des Griffbereichs des Traggriffs nicht nur mit jeder einzelnen der vorstehend erwähnten Massnahmen, sondern auch mit jeder beliebigen Massnahmenkombination erzielt werden kann.

Für den Fall, dass vom Behälterboden ein Fussteil nach unten abragt, kann dieses beispielsweise als vorzugsweise mit dem Behältermantel fluchtender Fussmantel ausgebildet sein. Bei einer anderen zweckmässigen Ausgestaltung des Fussteils sind vorzugsweise drei oder vier vom Rand des Behälterbodens abragende Einzelfüsse vorgesehen. Eine weitere Variante eines Fussteils ist ein Standring, der mit dem Rand des Behälterbodens über Stege verbunden ist. Hierbei soll der Standring im wesentlichen mit dem Behältermantel fluchten.

Neben der Bereitstellung eines Traggriffs mit höher gelegtem Griffbereich kann es sich auch als zweckmässig erweisen, über dem Traggriff einen oder mehrere zusätzliche Traggriffe anzuordnen, wobei diese seitlich gegeneinander versetzt sein können. Eine Giesskanne mit zwei oder mehr übereinander angeordneten Traggriffen ermöglicht einerseits die rückenschonende Verwendung der Giesskanne durch unterschiedlich grosse Personen und ermöglicht andererseits einer Person die Auswahl der für sie günstigsten Griffhöhe.

Eine weitere zweckmässige Ausgestaltung einer erfindungsgemässen Giesskanne liegt in einem Traggriff, der zur Vergrösserung der Gesamthöhe der Giesskanne verstellbar ist.

Die Fussteile und/oder die Traggriffe können an der Giesskanne lösbar befestigt sein. So können beispielsweise auch Giesskannen mit ungenügender Gesamthöhe auf einfache Art nachgerüstet werden.

Eine grosse Anzahl von Variationsmöglichkeiten zur Veränderung der Gesamthöhe einer Giesskanne kann mit der Bereitstellung eines aus Fussteilen und/oder Traggriffen bestehenden Sets erreicht werden. Zur Vermeidung von Adaptionsproblemen kann ein derartiges Set auch eine Giesskanne enthalten.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf eine Person mit einer Giesskanne nach dem Stand der Technik;
- Fig. 2 die Seitenansicht einer ersten Ausführungsform einer Giesskanne mit einem Fussteil;
- Fig. 3 die Ansicht des Fussteils der Giesskanne von Fig. 2 von der Unterseite her betrachtet;
- Fig. 4 eine zweite Ausführungsform einer Giesskanne mit einem Fussteil;
- Fig. 5 die Ansicht des Fussteils der Giesskanne von Fig. 4 von von der Unterseite her betrachtet;
- Fig. 6 eine dritte Ausführungsform einer Giesskanne mit einem Fussteil;
- Fig. 7 die Ansicht der Fussteils der Giesskanne von Fig. 6 von von der Unterseite her betrachtet;
- Fig. 8 die Seitenansicht einer Giesskanne mit zwei übereinander angeordneten Traggriffen.

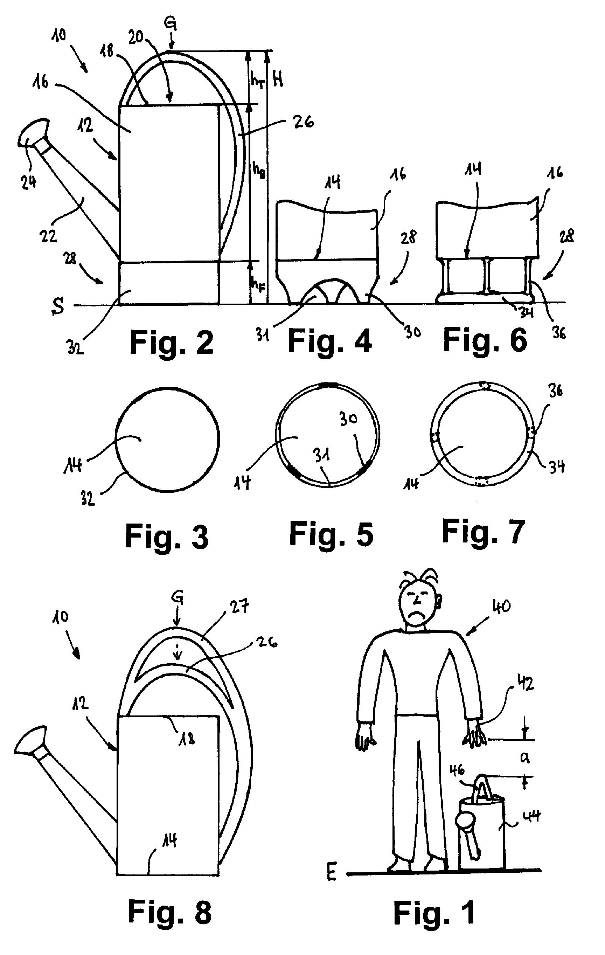

In Fig. 1 sind die Grössenverhältnisse bei Verwendung einer Giesskanne nach dem Stand der Technik dargestellt. Einer auf einer horizontalen Ebene E neben einer Giesskanne 44 nach dem Stand der Technik stehenden Person 40 ist es nicht möglich, mit ihrer Hand 42 in im wesentlichen aufrechter Haltung den Traggriff 46 der Giesskanne 44 zu umgreifen, da die Hand 42 vom Traggriff 46 um ein Mass a getrennt ist. Dieser Abstand a zwischen Hand 42 und Traggriff 46 bei einer üblichen Giesskanne 44 nach dem Stand der Technik liegt bei einer üblichen Gesamthöhe der Giesskanne von etwa 30 bis 40 cm und einer Grösse der Person von beispielsweise 180 cm in der Grössenordnung von etwa 20 bis 40 cm.

Es ist aus der Zeichnung ohne weiteres ersichtlich, dass die Person 40 die Giesskanne 44 nach dem Stand der Technik nur ergreifen kann, wenn sie in die Knie geht oder sich vornüber beugt, wobei die letztere Bewegung beim Anheben von Giesskannen am häufigsten beobachtet wird. Bei diesem Vornüberbeugen und wieder Aufrichten wird hauptsächlich die Rückenmuskulatur beansprucht. Wird dieser Bewegungsablauf mehrere Male hintereinander ausgeführt, so stellen sich bei untrainierten oder auch bei älteren Menschen oftmals schon nach kurzer Zeit Rückenschmerzen ein.

Eine in den Fig. 2 und 3 gezeigte Giesskanne 10 weist einen Behälter 12 mit einem Fassungsvermögen von beispielsweise 12 L auf. Der Behälter 12 umfasst einen Behältermantel 16, der unten von einem Behälterboden 14 verschlossen ist. Der ober Behälterrand 18 begrenzt eine Einfüllöffnung 20, die sich über den gesamten oder nur über einen Teil des Behälterquerschnitts erstrecken kann. Am Behältermantel 16 ist im Bereich des Behälterbodens 14 ein schräg nach oben verlaufendes Giessrohr 22 mit einem aufsteckbaren Brauseaufsatz 24 festgelegt. Ein mit dem Behälter 12 verbundener Traggriff 26 erstreckt sich bogenförmig vom oberen Behälterrand 18 zum unteren Bereich des Behältermantels 16.

Vom Behälterboden 14 ragt ein Fussteil 28 in der Form eines mit dem Behältermantel 16 fluchtenden Fussmantels 32 ab. Der untere Rand des Fussmantels 32 definiert eine Standfläche S. Die Gesamthöhe H der Giesskanne 10 ergibt sich, bezogen auf die Standfläche S, als Summe der Höhe h_{F} des Fussteils 28, der Höhe h_{B} des Behälters 12 vom Behälterboden 14 zum oberen Behälterrand 18 und der maximalen Höhe h_{T} des Traggriffs 26 über dem oberen Behälterrand 18. Der Traggriff 26 im Bereich seiner maximalen Höhe h_{T} stellt den Griffbereich G zum Anheben und Tragen der Giesskanne 10 dar.

In den Fig. 4 und 5 ist eine zweite Ausführungsform eines Fussteils 28 dargestellt. Die Standfläche S wird hier definiert durch drei einzelne Füsse 30, die beispielsweise von einem Fussmantel 32 ausgehend durch entsprechende Ausnehmungen 31 gebildet sind.

Die Fig. 6 und 7 zeigen eine dritte Ausführungsform eines Fussteils 28. Hier ragen vom Rand des Behälterbodens 14 beispielsweise drei bis fünf Stege 36 ab. Diese Stege 36 sind mit einem die Standfläche S definierenden und im wesentlichen mit dem Behältermantel 16 fluchtenden Standring 34 verbunden.

Die in Fig. 8 gezeigte Giesskanne 10 weist über dem Traggriff 26 einen weiteren Traggriff 27 auf. Dieser zweite Traggriff 27 kann gegenüber dem Traggriff 26 seitlich versetzt angeordnet sein. Weiter kann der zweite Traggriff 27 beispielsweise mit Befestigungselementen zur Festlegung am ersten Traggriff 26 ausgestattet sein. Auf diese Weise ist es beispielsweise möglich, eine Standard-Giesskanne mit zu geringer Gesamthöhe nachzurüsten.

An dieser Stelle sei noch erwähnt, dass die Ausgestaltung der erfindungsgemässen Giesskanne bezüglich der Behälterform und der Ausgestaltung des Fussteils und des Traggriffs nicht auf die in den Fig. 2 bis 8 gezeigten Ausführungsformen beschränkt ist, sondern sich vielmehr auf alle Giesskannen erstreckt, deren Gesamthöhe H so gewählt ist, dass die Giesskanne von einer Person in aufrechter Haltung ergriffen und angehoben werden kann.

## Patentansprüche

1. Giesskanne, umfassend einen Behälter (12) mit einem unten von einem Behälterboden (14) verschlossenen und oben zur Bereitstellung einer Einfüllöffnung (20) zumindest teilweise offenen Behältermantel (16), ein mit dem Behälter (12) verbundenes Giessrohr (22) und einen am Behälter (12) festgelegten Traggriff (26) mit einem den grössten, der Gesamthöhe (H) der Giesskanne (10) entsprechenden Abstand senkrecht zu einer Standfläche (S) der Giesskanne (10) aufweisenden Griffbereich (G),
**dadurch gekennzeichnet, dass**
die Gesamthöhe (H) der Giesskanne (10) so eingestellt oder einstellbar ist, dass der Griffbereich (G) des Traggriffs (26) der auf einer horizontalen Ebene (E) stehenden Giesskanne (10) von einer Hand (42) einer auf der gleichen Ebene (E) in im wesentlichen aufrechter Haltung stehenden Person (40) umgreifbar ist.

2. Giesskanne nach Anspruch 1, **dadurch gekennzeichnet, dass** vom Behälterboden (14) ein Fussteil (28) nach unten abragt.

3. Giesskanne nach Anspruch 2, **dadurch gekennzeichnet, dass** das Fussteil (28) als vorzugsweise mit dem Behältermantel (16) fluchtender Fussmantel (32) ausgebildet ist.

4. Giesskanne nach Anspruch 2, **dadurch gekennzeichnet, dass** das Fussteil (28) aus wenigstens drei vom Rand des Behälterbodens (14) abragenden Einzelfüssen (30) besteht.

5. Giesskanne nach Anspruch 2, **dadurch gekennzeichnet, dass** das Fussteil (28) ein an vom Rand des Behälterbodens (14) abragenden Stegen (36) befestigter, vorzugsweise im wesentlichen mit dem Behältermantel (16) fluchtender Standring (34) ist.

6. Giesskanne nach einem der Ansprüche 1 bis 5, **dadurch gekennzeichnet, dass** über dem Traggriff (26) wenigstens ein zusätzlicher Traggriff (27) angeordnet ist.

7. Giesskanne nach Anspruch 6, **dadurch gekennzeichnet, dass** die Traggriffe (26,27) seitlich gegeneinander versetzt angeordnet sind.

8. Giesskanne nach einem der Ansprüche 1 bis 5, **dadurch gekennzeichnet, dass** der Traggriff (26) zur Vergrösserung der Gesamthöhe (H) der Giesskanne (10) verstellbar ist.

9. Giesskanne nach einem der Ansprüche 2 bis 8, **dadurch gekennzeichnet, dass** die Fussteile (28,30,32,34,36) und/oder die Traggriffe (26,27) an der Giesskanne (10) lösbar befestigt sind.

10. Set mit Fussteilen (28,30,32,34,36) und/oder Traggriffen (26,27) und wahlweise einer Giesskanne nach Anspruch 9 zum Nachrüsten von Giesskannen (10).
